# EUROPÄISCHE PATENTSCHRIFT

(11) **EP 3 205 435 B1**
(45) Veröffentlichungstag und Bekanntmachung des Hinweises auf die Patenterteilung: **14.04.2021**
(21) Anmeldenummer: 17155217.7
(22) Anmeldetag: 08.02.2017
(51) Int. Cl.: B23K 9/173, B23K 9/28, B23K 9/23, B23K 9/12, B23K 9/007, B23K 101/18, B23K 103/20, B23K 103/22, B23K 103/16

(54) **SCHWEISSVERFAHREN UND VORRICHTUNG ZUM VERBINDEN VON ÜBERLAPPENDEN BLECHEN**
WELDING METHOD AND DEVICE FOR JOINING OVERLAPPING SHEETS
PROCÉDÉ DE SOUDAGE ET DISPOSITIF DE SOUDAGE DE TÔLES EN CHEVAUCHEMENT

(30) Priorität: 12.02.2016 DE 102016102459
(43) Veröffentlichungstag der Anmeldung: 16.08.2017
(73) Patentinhaber: Fachhochschule Brandenburg, 14770 Brandenburg an der Havel (DE)
(72) Erfinder: EBERT-SPIEGEL, Michael, 86836 Lager Lechfeld (DE); SCHWECHHEIMER, Christian, 14828 Görzke (DE)
(74) Vertreter: Kaufmann, Sigfrid

(56) Entgegenhaltungen:
- EP-A1- 0 857 533
- DE-A1-102010 044 886
- US-A1- 2009 230 107
- US-A1- 2014 008 328

## Beschreibung

Die Erfindung betrifft ein Schweißverfahren zum Verbinden von überlappenden Blechen mittels eines im Lichtbogen einer Metallschutzgasschweißvorrichtung abschmelzenden draht- oder bandförmigen metallischen Schweißdrahtes sowie eine Metallschutzgasschweißvorrichtung zur Durchführung des Verfahrens.

Aus dem Stand der Technik sind verschiedenste Verfahren zur Verbindung von überlappenden bzw. übereinanderliegenden Blechen bekannt, u. a. die Punktschweißverfahren. Zu diesen zählen nicht nur das allgemein bekannte Widerstandspunktschweißen sondern auch die Punktschweißverfahren mittels Lichtbogen, wie z. B. das WIG, das MAG-Punktschweißen oder das Lochpunktschweißen. Sie eignen sich besonders, wenn die zu verschweißenden Bauteile nur einseitig zugänglich sind. Beim WIG- oder MAG-Punktschweißen werden die Bleche an einer spezifischen Position aufgeschmolzen und es bildet sich eine Schweißlinse, die die Bleche stoffschlüssig im überlappenden Bereich verbindet.

In DE 198 82 096 B4 ist ein Verfahren zum Punktschweißen mehrerer flächig aufeinander liegender Werkstücke offenbart, demgemäß zunächst ein Loch in ein Werkstück mittels eines Plasmalichtbogens eingebracht wird. Anschließend werden die Werkstücke mit dem Plasmalichtbogen unter gleichzeitiger Einbringung von Füllmaterial aufgeschmolzen und verschweißt. Nachteilig bei diesem Verfahren ist die separate Zuführung des Füllmaterials in den Bereich des Plasmalichtbogens.

Ein ähnliches Verfahren zum Verbinden von überlappenden Bauteilen gemäß dem Oberbegriff von Anspruch 1 beschreibt
DE 10 2010 044 886 A1. Demzufolge wird ein Loch im oberen Bauteil mittels eines Zusatzwerkstoffes ausgefüllt, wobei eine stoffschlüssige Verbindung mit dem unteren Bauteil entsteht.

Nach dem in DE 10 2008 033 415 A1 beschriebenen Plasmalichtbogenpunktschweißen zur Erzeugung einer Mehrblechverbindung werden die blechförmigen Fügepartner an der Schweißstelle mittels ionisiertem Plasma durchblasen, um diese punktuell zunächst auf- und dann miteinander zu verschmelzen. Problematisch bei diesem Verfahren ist, dass beim Durchblasen des schmelzflüssigen Schweißgutes Einschlüsse von Gasen im selbigen entstehen können. Daher sind weitere Verfahrensschritte zur Entgasung erforderlich. Schweißmaterial wird mittels eines Schweißdrahtes seitlich in die Fügestelle zugeführt.

Weiterhin bekannt aus EP 0 857 533 A1 ist ein Verfahren zum Metallschutzgasschweißen demgemäß die Drahtelektrode durch eine Kontaktrohr geführt werden kann, wobei besondere Verfahrensvorteile durch Einhaltung eines Abstandes zwischen Kontaktrohr und Bauteil erzielbar sind. Abstandshalter für Schweißbrenner sind zudem in US 2009 /0230107 A1 offenbart.

Schweißverbindungen von Blechen aus artungleichen Werkstoffen, insbesondere solche mit stark unterschiedlichen Materialeigenschaften, wie z. B. verschieden hohen Schmelztemperaturen, stellen besondere Anforderungen an die dafür angewandten Schweißverfahren, um die erforderliche Werkstoffqualität in der Fügezone zu erreichen. Im Schweißgut können sich durch Mischung der am Schweißprozess beteiligten Fügewerkstoffe Legierungen und/oder intermetallische Verbindungen mit unerwünschten Eigenschaften, z. B. zu geringer Festigkeit oder zu hoher Sprödigkeit, bilden.

Das Verschweißen von Stahl mit Aluminiumwerkstoffen ist ein bekanntes Beispiel für ein solches Verhalten. Beim gemeinsamen Aufschmelzen und nachfolgenden Erstarren bildet sich eine spröde Verbindungsschicht, die bei Beanspruchung durch äußere Kräfte nur geringfügig belastbar ist. Für Verfahren zur Verbindung von Stahl- mit Aluminiumblechen muss daher der Schweißprozess streng kontrolliert ablaufen. So kann z. B. ein Fügepartner vollständig aufgeschmolzen und der andere Fügepartner nur angeschmolzen werden. Ein Beispiel hierfür ist in DE 103 04 954 A1 geschildert.

Nachteilig bei den bekannten Schweißverfahren ist, dass mit diesen eine ausschließlich stoffschlüssige Verbindung der Fügepartner erzeugt wird. Problematisch sind folglich diese Fügeverfahren für legierungstechnisch inkompatible Werkstoffkombinationen, d. h. solche, bei denen es beim Verschweißen zur Sprödphasenbildung kommt oder bei denen Mischbarkeit der Werkstoffe begrenzt ist.

Aufgabe der Erfindung ist es, die genannten Nachteile zu überwinden und ein Verfahren bereitzustellen, das eine stoff- und formschlüssige Punktschweißverbindung von überlappenden Blechwerkstoffen ermöglicht. Durch das Schweißverfahren soll außerdem die Bildung unerwünschter Sprödphasen oder Legierungen beim Verbinden artungleicher Werkstoffe vermieden werden.

Erfindungsgemäß wird die vorstehend genannte Aufgabe mit einem Verfahren nach Patentanspruch 1 gelöst; zweckmäßige Ausgestaltungen der Erfindung finden sich in den Unteransprüchen.

Nach Maßgabe der Erfindung werden überlappende Bleche mittels eines schmelzbaren, draht- oder bandförmigen Ausgangswerkstoffs, im Folgenden allgemein als Schweißdraht bezeichnet, verschweißt, wobei ein elektrischer Lichtbogen als Energiequelle zum Aufschmelzen der Bleche und des Schweißdrahtes verwendet wird. Die zu verbindenden Bleche werden dabei im Bereich einer vorgegebenen Fügestelle während des Schweißvorganges mittels des Schweißdrahtes durchsetzt.

Zur Durchführung des erfindungsgemäßen Verfahrens wird eine Metallschutzgasschweißvorrichtung eingesetzt, wie sie für die allgemein bekannten GMAW-Verfahren (Gas Metal Arc Welding) Metallinertgasschweißen (MIG) oder Metallaktivgasschweißen (MAG) üblich ist. Diese weist einen Schweißbrenner und eine Drahtfördereinrichtung auf, wobei durch Letztere ein Drahtvorschub des Schweißdrahtes erzeugbar ist, der hierzu in seiner Längsrichtung innerhalb des Schweißbrenners beweglich geführt wird.

Die überlappenden Bleche umfassen mindestens ein Oberblech und ein Unterblech, wobei für das erfindungsgemäße Verfahren bevorzugt Feinbleche verwendete werden.

Der Schweißbrenner wird an der gewünschten Fügestelle über dem Oberblech mit vorgegebenen Abstand zu dessen Oberfläche positioniert, wobei der Schweißdraht, in einem Winkel von 90 ± 30° zur Blechebene des Oberblechs ausgerichtet wird. Der Schweißdraht wird anschließend mittels der Drahtfördereinrichtung mit einer variabel einstellbaren Drahtvorschubgeschwindigkeit in Richtung des Oberblechs bewegt und der Lichtbogen zwischen Oberblech und Schweißdraht gezündet. Die Zündung kann mittels eines allgemein bekannten Startprozesses erfolgen, z. B. der Lift-Arc-Methode.

Im Bereich des Lichtbogens werden nun das Oberblech und der Schweißdraht aufgeschmolzen, wobei sich ein wannenförmiges Bad aus schmelzflüssigem Schweißgut bildet.

Unter dem Begriff Schweißgut werden im Folgenden das aufgeschmolzene und das wiedererstarrte Material in der Schweißverbindung verstanden. Dieses kann dabei in Abhängigkeit der Anteile aufgeschmolzenen Materials aus den verschiedenen Blechen und dem Schweißdraht in seiner Zusammensetzung variieren. Zunächst ist das schmelzflüssige Schweißgut jedoch nur aus den Werkstoffen des abschmelzenden Schweißdrahtes und des Oberblechs gebildet.

Durch den fortwährenden Drahtvorschub drückt der Schweißdraht - direkt durch mechanischen Kontakt oder indirekt durch das vor der Schweißdrahtspitze voranlaufende Lichtbogenplasma - das schmelzflüssige Schweißgut auf das Unterblech. Dabei wird das Unterblech durchgeschmolzen.

Dieses Aufdrücken des schmelzflüssigen Schweißgutes auf das Unterblech mittels des Schweißdrahtes wird durch Steuerung der Drahtvorschubgeschwindigkeit erreicht, wobei auch vorgesehen ist, die Drahtvorschubgeschwindigkeit zu variieren. Die durchschnittliche Drahtvorschubgeschwindigkeit liegt hierbei im Bereich von 10 bis 40 m·min⁻¹. Im Vergleich dazu werden im Allgemeinen beim Metallschutzgasschweißen Drahtvorschubgeschwindigkeiten im Bereich von 1 bis 25 m·min⁻¹ angewandt.

Beim Durchschmelzen des Unterblechs wird in diesem ein Durchbruch mit geringerer lateraler Ausdehnung erzeugt als die des wannenförmigen Schweißgutbades. An den Rändern dieses Durchbruchs wird das Unterblech nur angeschmolzen, d. h., es bildet sich nur eine schmale Zone mit metallurgischer Wechselwirkung zwischen Schweißgut und Unterblech aus.

Das schmelzflüssige Schweißgut, welches im Wesentlichen aus dem Material des Schweißdrahtes und des Oberblechs besteht, wird aufgrund der fortwährenden Bewegung des Schweißdrahtes durch die Engstelle des Durchbruchs hindurchgedrückt.

Die Vorgänge des Aufdrückens des schmelzflüssigen Schweißguts auf das Unterblech mittels des Schweißdrahtes, des Durchschmelzens des Unterblechs und des Durchdrückens des Schweißgutes werden zusammenfassend als Durchsetzen bezeichnet.

Nach dem Durchsetzen wird die Fügestelle mit schmelzflüssigen Schweißgut aufgefüllt, welches hauptsächlich aus dem im Lichtbogen fortwährend abschmelzenden Schweißdraht besteht.

Nach einer bestimmten Schweißzeit, die von eingestellten Prozessparametern oder Prozessereignissen abhängt, erfolgen die Abschaltung des Lichtbogens und der Drahtfördereinrichtung nach einem allgemein bekannten Endprozess. Das Schweißgut erstarrt tropfenförmig im Bereich des Durchbruchs an der dem Schweißbrenner abgewandten Oberfläche am Unterblech. Dieser Bereich des erstarrten Schweißgutes wird im Folgenden Schließkopf genannt; der aus dem wannenförmigen Bad hervorgegangene, erstarrte Bereich des Schweißgutes innerhalb des Oberblechs wird als Setzkopf und das erstarrte Schweißgut im Bereich des Durchbruchs im Unterblech als Schaft bezeichnet.

Aufgrund der angewandten Drahtvorschubgeschwindigkeit werden für das Verschweißen von Feinblechen Schweißzeiten erreicht, die sich typischerweise in der Größenordnung von 0,1 bis 1,0 Sekunden bewegen. Bei den allgemein bekannten MAG-Punktschweißverfahren liegen die Schweißzeiten zum Vergleich dazu bei ca. 1 bis 3 Sekunden.

Durch die Steuerung von Drahtvorschubgeschwindigkeit und Schweißzeit und der daraus resultierenden Menge des durch den Durchbruch im Unterblech durchgedrückten Schweißgutes wird erreicht, dass der Schließkopf - ebenso wie der Setzkopf - eine wesentlich größere laterale Ausdehnung haben als der Schaft.

Damit ist durch das beschriebene Verfahren neben dem Stoffschluss auch der Formschluss der Punktschweißverbindung entsprechend der Aufgabe der Erfindung realisiert.

Die Erfindung verknüpft spezifische Eigenarten des Schmelzschweißens mit denen des Nietens. Die mannigfaltigen Vorteile des erfindungsgemäßen Verfahrens, die im Folgenden nur in Grundzügen geschildert werden, erwachsen aus den Synergieeffekten der Kombination der Fügeverfahrenscharakteristika.

Die Ähnlichkeit der durch das erfindungsgemäße Verfahren erzeugten Punktschweißverbindung zu einer Nietverbindung ist leicht ersichtlich: Der Schließ- und Setzkopf entsprechen bezüglich ihres Aufbaus und ihrer Funktionalität dem Schließ- und dem Setzkopf der Nietverbindung; der Schaft korrespondiert mit dem Nietschaft.

Einer der Vorzüge des erfindungsgemäßen Verfahrens ist, dass das Bauteilgewicht und die Dimensionen der verbundenen Bauteile nach dem Schweißen weitgehend unverändert sind. Konstruktiv kann der Bauraum bei Einsatz der auf diese Weise punktgeschweißten Bleche folglich vollständig ausgenutzt werden - im Unterschied z. B. zu Schraubenverbindungen, die ein erhebliches Maß an Bauraum erfordern und das Gewicht der verbundenen Baugruppe beträchtlich erhöhen.

Zur Durchführung des Schweißverfahrens sind marktübliche, weit verbreitete und preisgünstige Schweißvorrichtungen einsetzbar. Der Vorrichtungsaufbau und die Verfahrensdurchführung können durch fachmännisch geschultes Personal einfach und kurzfristig realisiert werden. Damit ist durch die Erfindung ein ausgesprochen kosteneffektives und zeitsparendes Punktschweißverfahren bereitgestellt.

Im Unterschied zum klassischen Nieten oder zum Widerstandspunktschweißen erfordert das erfindungsgemäße Verfahren nur eine einseitige Zugänglichkeit an einer der Oberflächen der zu verbindenden Blechbauteile. Damit eignet sich das Verfahren z. B. hervorragend für das Anbringen von Blechverkleidungen.

Ein weiterer Vorteil ist - obgleich es sich um ein Schmelzschweißverfahren handelt - der geringe Wärmeeintrag in die zu fügenden Bleche. Folglich kommt es nur zu minimalen, lokal begrenzten Verzügen in den Bauteilen. Aufwendige Richtarbeiten können entfallen.

Besonders hervorzuheben ist, dass mittels des erfindungsgemäßen Verfahrens artungleiche Blechwerkstoffe miteinander verschweißt werden können. Dies wird ermöglicht durch die Unterdrückung extensiver metallurgischer Wechselwirkungen infolge der verfahrenstypisch kurzen Schweißzeiten. Das schnelle Durchtreten des schmelzflüssigen Schweißgutes durch das Unterblech verhindert, dass ausgeprägte Legierungszonen oder intermetallische Verbindungen entstehen.

Ein weiterer Vorzug ergibt sich aus der Kombination des Form- und Stoffschlusses in der Fügeverbindung, hervorgerufen durch die charakteristische Form des erstarrten Schweißgutes - vergleichbar mit einem Niet. Die redundant wirkenden physikalischen Verbindungsprinzipien führen zu einer ausfallsicheren Punktschweißverbindung ("Fail-safe-Verhalten"). So können z. B. Bindefehler zwischen Schweißgut und Blechwerkstoffen in gewissem Umfang toleriert werden, ohne dass es zum Versagen der Verbindung kommt. Die erfindungsgemäße Punktschweißverbindung eignet sich daher für sicherheitsrelevante Schweißverbindungen.

Außerdem schrumpft das Schweißgut im Anschluss an die Erstarrung mit der weiteren Abkühlung. Dadurch werden Zugspannungen in Schweißrichtung, also axial, erzeugt, die wiederum im Gegenzug Druckspannungen auf die übereinander liegenden Bleche aufbringen. Zusätzlich zu Form- und Stoffschluss trägt folglich eine kraftschlüssige Komponente zur sicheren Verbindung der Bleche bei.

Im Weiteren wird auf spezifische Ausgestaltungen der Erfindung eingegangen.

In einer Ausführungsform können zwischen dem Ober- und dem Unterblech ein oder mehrere Zwischenbleche eingelegt werden. Der Schweißvorgang wird in Abhängigkeit der Werkstoffe der einzelnen Bleche und des beabsichtigten Aufbaus der Punktschweißverbindung so gesteuert, dass der Setzkopf oder der Schaft den Bereich eines spezifischen Zwischenblechs einschließen. Mit dieser Ausführungsform des Verfahrens können nicht nur zwei, sondern mehrere blechförmige Bauteile verbunden werden.

Es kann vorgesehen sein, dass die Fügestelle mittels der Metallschutzgasschweißvorrichtung mit einem Schutzgas beaufschlagt wird. Die Anwendung von Schutzgasschleiern zur Abschirmung des schmelzflüssigen Schweißgutes von der Umgebungsatmosphäre verhindert die Gasaufnahme im Schweißgut ebenso wie dessen unerwünschte Oxidation. Dabei sind einerseits inerte Gase, wie Stickstoff oder die Edelgase Argon und Helium, oder andererseits aktive Gase, wie Kohlendioxid oder kohlendioxidhaltige Gasmischungen, geeignet. Durch letztgenannte Gase kann der Schweißprozess aktiv, z. B. bzgl. Einbrand, Tropfengröße oder Spritzerverluste, neben der Schirmung gegen die Umgebungsatmosphäre beeinflusst werden. Die Auswahl des Schutzgases ist grundsätzlich in erster Linie von den zu verschweißenden Werkstoffen abhängig. Das Edelgas Argon als Schutzgas ist weithin gebräuchlich und kann universell beim Schweißen der unterschiedlichsten Werkstoffe angewandt werden.

In einer weiteren Ausgestaltung der Erfindung werden für den Schweißdraht und das Oberblech ein Metall oder eine Metalllegierung mit hohem Schmelzpunkt, z. B. eine Eisen-, Nickel-, Titan- oder Molybdän-basierte Metalllegierung, und für das Unterblech ein Metall oder eine Metalllegierung mit niedrigem Schmelzpunkt, z. B. eine Aluminium-, Magnesium-, Kupfer-Zink- oder Kupfer-Zinn-basierte Metalllegierung, verwendet. Die hohe thermische Energie, die nach dem Aufschmelzen des Oberblechs im schmelzflüssigen Schweißgut gespeichert ist, ermöglicht beim Zustellen des Schweißdrahtes ein besonders schnelles Durchschmelzen des niedrigschmelzenden Werkstoffs des Unterblechs. Dadurch ist das erfindungsgemäße Verfahren zum Verbinden überlappender Bleche mit stark unterschiedlichen Schmelztemperaturen der Werkstoffe ausgesprochen effektiv.

Geeignet in dieser Ausgestaltung der Erfindung sind z. B. die Werkstoffkombinationen aus Stählen mit Aluminiumlegierungen, Bronze oder Messing ebenso wie von Nickel- oder Titanlegierungen mit den genannten Aluminium- und Kupferlegierungen. Des Weiteren können auch beschichtete Bleche mittels des Verfahrens verbunden werden. Die Beschichtungen können neben dem durch sie beabsichtigten Korrosions- oder Verschleißschutz auch die Qualität der Punktschweißverbindung verbessern, indem z. B. die Beschichtungswerkstoffe in der Umgebung der Fügestelle an metallurgischen Wechselwirkungen teilnehmen und zur stoffschlüssigen Verbindung beitragen. Ebenso können erfindungsgemäß Verbundbleche, z. B. in Sandwichbauweise aus Blechen mit Kunststoffeinlagen, verschweißt werden.

Gemäß der Erfindung können mit dem Verfahren auch artungleiche Werkstoffe mit ähnlichen Schmelztemperaturen verbunden werden. So ist es z. B. möglich, ein Oberblech aus einem Stahlwerkstoff oder einer Nickellegierung mit einem Unterblech aus einer Titanlegierung zu verschweißen. Die schlechte Leitfähigkeit der Titanlegierung führt dazu, dass der Durchbruch im Unterblech räumlich eng begrenzt bleibt, da sich die thermische Energie beim Zustellen des Schweißdrahtes an der zentralen Kontaktstelle des schmelzflüssigen Schweißgutes mit dem Unterblech konzentriert.

In vorteilhafter Weise verfügt die Metallschutzgasschweißvorrichtung zur Durchführung des erfindungsgemäßen Verfahrens über einen Abstandshalter, der die Arretierung des Schweißbrenners mit vorgegebenen Abstand über der dem Schweißbrenner zugewandten Oberfläche des Oberblechs gewährleistet. Damit werden Positionsschwankungen des Schweißdrahtes aufgrund von Bewegungen des Schweißbrenners, z. B. durch Vibrationen, vermieden, sodass die Steuerung des Schweißdrahtes sehr exakt erfolgen kann.

Die Erfindung wird anhand des nachfolgenden Ausführungsbeispiels mit Bezug auf die schematischen Zeichnungen näher erläutert. Dazu zeigen
- Fig. 1:: das Erzeugen des Schweißgutes im Oberblech mittels einer Metallschutzgasschweißvorrichtung in perspektivischer Ansicht, und
- Fig. 2:: das Durchsetzen der überlappenden Bleche in perspektivischer Ansicht.

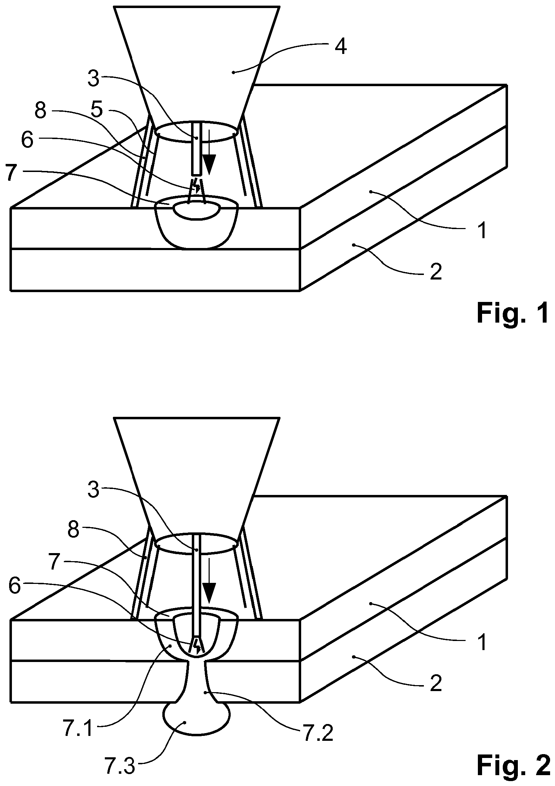

Nach Figur 1 wird für das Verfahren eine handelsübliche Metallschutzgasschweißvorrichtung zum Metallinertgasschweißen (MIG) verwendet. Diese weist einen Schweißbrenner 4, einen Schweißdraht 3 und eine nicht dargestellte Drahtfördervorrichtung auf.

Die überlappenden Bleche bestehen aus dem Oberblech 1 und dem Unterblech 2. Das Oberblech 1 ist ein Feinblech mit einer Blechdicke von 1,2 mm aus dem Stahlwerkstoff 22MnB5; das Unterblech 2 ist ebenfalls ein Feinblech mit einer Blechdicke von 1,4 mm aus einer AlMgSi-Legierung der Legierungsgruppe 6000. Das Oberblech ist mit einer Feueraluminierung aus 90 m-% Al und 10 m-% Si versehen. Als Schweißdraht 3 wird der Schweißdrahtwerkstoff G3Si1 (SG 2) mit einem Drahtdurchmesser von 1,0 mm verwendet.

Der Schweißbrenner 4 wird im Abstand von 10 mm über dem Oberblech 1 an der Fügestelle mit Hilfe des Abstandshalters (8) arretiert, wobei der Schweißdraht 3 dabei senkrecht zur Blechebene ausgerichtet ist. Anschließend wird die Fügestelle mit dem Schutzgas 5 Argon beaufschlagt.

Der Schweißdraht 3 wird mittels der Drahtfördereinrichtung in Richtung des Oberblechs 1 mit einer Drahtvorschubgeschwindigkeit von 14 m·min⁻¹ zugestellt. Der Lichtbogen 6 wird bei Annäherung des Schweißdrahtes 3 an das Oberblech 1 gezündet, wobei durch die Erwärmung im Bereich des Lichtbogens 6 der Schweißdraht 3 und das Oberblech 1 geschmolzen werden. Dabei bildet sich ein wannenförmiges Bad schmelzflüssigen Schweißgutes 7.

Der Lichtbogen 6 taucht - wie die Figur 2 zeigt - durch den fortwährenden Drahtvorschub in das schmelzflüssige Schweißgut 7 ein und das Lichtbogenplasma treibt dieses vor der Drahtspitze des Schweißdrahtes 3 voran. Durch den dabei auf das Unterblech 2 ausgeübten Druck wird dieses durchschmolzen und das schmelzflüssige Schweißgut 7 durch den im Unterblech 2 entstanden Durchbruch hindurchgedrückt.

Der fortwährend im Lichtbogen 6 abschmelzende Schweißdraht 3 füllt die Fügestelle mit dem Schweißgut 7.

Nach einer Schweißzeit von 0,5 s wird der Lichtbogen 6 abgeschaltet und das Schweißgut 7 erstarrt. Dabei bilden sich der tropfenförmige Schließkopf 7.3, der Setzkopf 7.1 und der Schaft 7.2. Diese Gestalt des Schweißgutes 7 erzeugt neben dem Stoffschluss den Formschluss vergleichbar zu einem passgenauen Stahlniet.

### Liste der verwendeten Bezugszeichen

- 1: Oberblech
- 2: Unterblech
- 3: Schweißdraht
- 4: Schweißbrenner
- 5: Schutzgas
- 6: Lichtbogen
- 7: Schweißgut
- 7.1: Setzkopf
- 7.2: Schaft
- 7.3: Schließkopf
- 8: Abstandshalter

## Patentansprüche

1. Schweißverfahren zum Verbinden von überlappenden Blechen, mindestens umfassend ein Oberblech (1) und ein Unterblech (2), mittels einer Metallschutzgasschweißvorrichtung, umfassend einen Schweißbrenner (4) mit einem Schweißdraht (3) und eine Drahtfördereinrichtung für den Drahtvorschub des Schweißdrahtes (3), der hierzu in seiner Längsrichtung innerhalb des Schweißbrenners (4) beweglich geführt ist, aufweisend die Verfahrensschritte:
a) Positionieren des Schweißbrenners (4) und damit des Schweißdrahtes (3) an einer vorbestimmten Fügestelle mit vorgegebenen Abstand über dem Oberblech (1), wobei der Schweißdraht (3) in einem Winkel von 90 ± 30° zur Blechebene des Oberblechs (1) orientiert ist;
b) Zustellen des Schweißdrahtes (3) in Richtung des Oberblechs (1) mittels der Drahtfördereinrichtung mit einer variabel einstellbaren Drahtvorschubgeschwindigkeit;
und **gekennzeichnet durch** die weiteren Verfahrensschritte:
c) Aufschmelzen des Oberblechs (1) und Abschmelzen des Schweißdrahtes (3) mittels eines zwischen dem Oberblech (1) und dem Schweißdraht (3) gezündeten Lichtbogens (6) unter Ausbildung eines wannenförmigen Schmelzbades aus schmelzflüssigem Schweißgut (7);
d) Aufdrücken des schmelzflüssigen Schweißgutes (7) auf das Unterblech (2) mittels des Schweißdrahtes (3), wobei die durchschnittliche Drahtvorschubgeschwindigkeit im Bereich von 10 bis 40 m·min⁻¹ liegt und das Unterblech (2) unter Ausbildung eines Durchbruchs, dessen laterale Ausdehnung kleiner als die des wannenförmigen Schmelzbades ist, durchgeschmolzen wird und im schmelzflüssigen Schweißgut (7) zusätzlich Material des Unterblechs (2) aufgenommen wird;
f) Durchdrücken des Schweißgutes (7) durch den Durchbruch im Unterblech (2) mittels des Schweißdrahtes (3);
g) Auffüllen der Fügestelle mit schmelzflüssigem Schweißgut (7), indem die Bleche (1, 2) und der Schweißdraht (3) mittels des Lichtbogens (6) fortgesetzt aufgeschmolzen werden; und
h) Abschalten des Lichtbogens (6) und der Drahtfördereinrichtung nach einer bestimmten Schweißzeit, wobei das Schweißgut (7) unter Ausbildung eines Setzkopfs (7.1) im Bereich des Oberblechs (1), eines tropfenförmigen Schließkopfs (7.3) an der dem Schweißbrenner (4) abgewandten Oberfläche am Unterblech (2) und eines Schafts (7.2) innerhalb des Unterblechs (2), dessen laterale Ausdehnung kleiner ist als die des Setzkopfs (7.1) und des Schließkopfs (7.3), erstarrt.

2. Schweißverfahren nach Anspruch 1, **dadurch gekennzeichnet, dass** die Schweißzeit im Bereich von 0,1 bis 1,0 Sekunden liegt.

3. Schweißverfahren nach Anspruch 1 oder 2, **dadurch gekennzeichnet, dass** zwischen Ober- und Unterbleche (1, 2) ein oder mehrere Zwischenbleche eingelegt werden.

4. Schweißverfahren nach einem der Ansprüche 1 bis 3, **dadurch gekennzeichnet, dass** die Blechdicke des Oberblechs, des Unterblechs und der Zwischenbleche kleiner als 3 mm ist.

5. Schweißverfahren nach einem der Ansprüche 1 bis 4, **dadurch gekennzeichnet, dass** die Fügestelle mittels der Metallschutzgasschweißvorrichtung mit einem Schutzgas (5) beaufschlagt wird, wobei als inertes Schutzgas Argon, Helium oder Stickstoff oder als aktives Schutzgas (5) Kohlendioxid oder ein Kohlendioxid enthaltendes Gasgemisch verwendet werden.

6. Schweißverfahren nach einem der Ansprüche 1 bis 5, **dadurch gekennzeichnet, dass** der Schweißdraht (3) und das Oberblech (1) aus einem Metall oder einer Metalllegierung mit hohem Schmelzpunkt und das Unterblech (2) aus einem Metall oder einer Metalllegierung mit niedrigem Schmelzpunkt bestehen.

7. Schweißverfahren nach Anspruch 6, **dadurch gekennzeichnet, dass** der Schweißdraht (3) und das Oberblech (1) aus einer Eisen-, Nickel-, Titan- oder Molybdänbasierten Metalllegierung bestehen.

8. Schweißverfahren nach Anspruch 6, **dadurch gekennzeichnet, dass** das Unterblech (2) aus einer Aluminium-, Magnesium-, Kupfer-Zink- oder Kupfer-Zinnbasierten Metalllegierung besteht.

9. Schweißverfahren nach einem der Ansprüche 1 bis 8, **dadurch gekennzeichnet, dass** der Schweißbrenner im vorgegebenen Abstand zu der dem Schweißbrenner zugewandten Oberfläche des Oberblechs mittels eines Abstandshalters (8) der Metallschutzgasschweißvorrichtung arretiert wird.

## Claims

1. Welding method for joining overlapping sheets, at least comprising an upper sheet (1) and a lower sheet (2), by means of a metal inert-gas-shielded welding device, comprising a welding torch (4) with a welding wire (3) and a wire feed facility to feed in the welding wire (3), which to this end is guided movably in its longitudinal direction inside the welding torch (4), having the method steps:
a) positioning of the welding torch (4) and thus of the welding wire (3) on a predetermined joining site with specified spacing above the upper sheet (1), whereby the welding wire (3) is orientated at an angle of 90 ± 30° to the sheet plane of the upper sheet (1);
b) delivery of the welding wire (3) in the direction of the upper sheet (1) by means of the wire feed facility with a variably adjustable wire feed speed;
and **characterised by** the further method steps:
c) fusing of the upper sheet (1) and melting of the welding wire (3) by means of an arc (6) started between the upper sheet (1) and the welding wire (3) with the formation of a trough-shaped molten puddle of molten weld metal (7);
d) pressing of the molten weld metal (7) onto the lower sheet (2) by means of the welding wire (3), whereby the average wire feed speed is in the range from 10 to 40 m·min⁻¹ and the lower sheet (2) is melted through with the formation of a breakthrough, the lateral extent of which is smaller than that of the trough-shaped molten puddle, and additionally material of the lower sheet (2) is absorbed in the molten weld metal (7);
f) pressing of the weld metal (7) through the breakthrough in the lower sheet (2) by means of the welding wire (3);
g) filling-up of the joining site with molten weld metal (7) through continuing fusing of the sheets (1, 2) and of the welding wire (3) by means of the arc (6); and
h) switching-off of the arc (6) and of the wire feed facility after a determined welding time, whereby the weld metal (7) solidifies with the formation of a performed head (7.1) in the region of the upper sheet (1), of a drop-shaped closing head (7.3) on the surface of the lower sheet (2) facing away from the welding torch (4) and of a shank (7.2) inside the lower sheet (2), the lateral extent of which is smaller than that of the performed head (7.1) and of the closing head (7.3).

2. Welding method according to claim 1, **characterised in that** the welding time is in the range from 0.1 to 1.0 seconds.

3. Welding method according to claim 1 or 2, **characterised in that** one or more intermediate sheets are inserted between upper and lower sheets (1, 2).

4. Welding method according to any of claims 1 to 3, **characterised in that** the sheet thickness of the upper sheet, of the lower sheet and of the intermediate sheets is less than 3 mm.

5. Welding method according to any of claims 1 to 4, **characterised in that** the joining site is supplied with a shielding gas (5) by means of the metal inert-gas-shielded welding device, whereby argon, helium or nitrogen is used as inert shielding gas or carbon dioxide or a gas mixture containing carbon dioxide is used as active shielding gas (5).

6. Welding method according to any of claims 1 to 5, **characterised in that** the welding wire (3) and the upper sheet (1) consist of a metal or a metal alloy with high melting point and the lower sheet (2) consists of a metal or a metal alloy with low melting point.

7. Welding method according to claim 6, **characterised in that** the welding wire (3) and the upper sheet (1) consist of an iron-, nickel-, titanium- or molybdenum-based metal alloy.

8. Welding method according to claim 6, **characterised in that** the lower sheet (2) consists of an aluminium-, magnesium-, copper-zinc- or copper-tin-based metal alloy.

9. Welding method according to any of claims 1 to 8, **characterised in that** the welding torch is stopped at the specified spacing from the surface of the upper sheet facing the welding torch by means of a spacer (8) of the metal inert-gas-shielded welding device.

## Revendications

1. Procédé de soudage pour la liaison de tôles en chevauchement, comprenant au moins une tôle supérieure (1) et une tôle inférieure (2), au moyen d'un dispositif de soudage à l'arc métallique sous gaz, comprenant un chalumeau de soudage (4) avec un fil d'apport (3) et un dispositif de transport de fil pour l'avance du fil d'apport (3) qui est guidé de manière mobile à cet effet dans son sens longitudinal dans le chalumeau de soudage (4), présentant les étapes de procédé :
a) le positionnement du chalumeau de soudage (4) et ainsi du fil d'apport (3) au niveau d'un point de jonction prédéterminé à distance prescrite au-dessus de la tôle supérieure (1), dans lequel le fil d'apport (3) est orienté dans un angle de 90 ±30° au plan de la tôle supérieure (1) ;
b) l'approche du fil d'apport (3) en direction de la tôle supérieure (1) au moyen du dispositif de transport de fil à une vitesse d'avance de fil réglable de manière variable ;
et **caractérisé par** les autres étapes de procédé :
c) la fusion de la tôle supérieure (1) et la fonte du fil d'apport (3) au moyen d'un arc électrique (6) allumé entre la tôle supérieure (1) et le fil d'apport (3) en réalisant un bain de fusion en forme de cuve de produit de soudage (7) en fusion ;
d) la pression du produit de soudage (7) en fusion sur la tôle inférieure (2) au moyen du fil d'apport (3), dans lequel la vitesse d'avance de fil moyenne se trouve dans la plage de 10 à 40 m min⁻¹ et la tôle inférieure (2) est parfondue en réalisant une percée dont l'extension latérale est inférieure à celle du bain de fusion en forme de cuve et du matériau de la tôle inférieure (2) est en outre reçu dans le produit de soudage (7) en fusion ;
f) l'enfoncement du produit de soudage (7) par la percée dans la tôle inférieure (2) au moyen du fil d'apport (3) ;
g) le remplissage du point de jonction avec du produit de soudage (7) en fusion en ce que les tôles (1, 2) et le fil d'apport (3) sont fondus en continu au moyen de l'arc électrique (6) ; et
h) l'arrêt de l'arc électrique (6) et du dispositif de transport de fil après un temps de soudage déterminé, dans lequel le produit de soudage (7) se solidifie en réalisant une tête de pose (7.1) dans la zone de la tôle supérieure (1), une tête de fermeture (7.3) en forme de goutte au niveau de la surface éloignée du chalumeau de soudage (4) au niveau de la tôle inférieure (2) et une tige (7.2) dans la tôle inférieure (2), dont l'extension latérale est inférieure à celle de la tête de pose (7.1) et de la tête de fermeture (7.3).

2. Procédé de soudage selon la revendication 1, **caractérisé en ce que** le temps de soudage se trouve dans la plage de 0,1 à 1,0 seconde.

3. Procédé de soudage selon la revendication 1 ou 2, **caractérisé en ce qu'**une ou plusieurs tôles intermédiaires sont introduites entre les tôles supérieure et inférieure (1, 2).

4. Procédé de soudage selon l'une des revendications 1 à 3, **caractérisé en ce que** l'épaisseur de la tôle supérieure, de la tôle inférieure et des tôles intermédiaires est inférieure à 3 mm.

5. Procédé de soudage selon l'une des revendications 1 à 4, **caractérisé en ce que** le point de jonction est sollicité au moyen du dispositif de soudage à l'arc métallique sous gaz par un gaz protecteur (5), dans lequel comme gaz protecteur inerte de l'argon, de hélium ou de l'azote est utilisé ou comme gaz protecteur actif (5) du dioxyde de carbone ou un mélange gazeux contenant du dioxyde de carbone est utilisé.

6. Procédé de soudage selon l'une des revendications 1 à 5, **caractérisé en ce que** le fil d'apport (3) et la tôle supérieure (1) se composent d'un métal ou d'un alliage de métal avec un point de fusion élevé et la tôle inférieure (2) se compose d'un métal ou d'un alliage de métal avec un point de fusion faible.

7. Procédé de soudage selon la revendication 6, **caractérisé en ce que** le fil d'apport (3) et la tôle supérieure (1) se composent d'un alliage de métal à base de fer, de nickel, de titane ou de molybdène.

8. Procédé de soudage selon la revendication 6, **caractérisé en ce que** la tôle inférieure (2) se compose d'un alliage de métal à base d'aluminium, de magnésium, de cuivre-zinc ou de cuivre-étain.

9. Procédé de soudage selon l'une des revendications 1 à 8, **caractérisé en ce que** le chalumeau de soudage est arrêté à distance prédéfinie de la surface tournée vers le chalumeau de soudage de la tôle supérieure au moyen d'un élément d'écartement (8) du dispositif de soudage à l'arc métallique sous gaz.
